# EUROPÄISCHE PATENTSCHRIFT

(11) **EP 2 620 322 B1**
(45) Veröffentlichungstag und Bekanntmachung des Hinweises auf die Patenterteilung: **13.04.2016**
(21) Anmeldenummer: 12152255.1
(22) Anmeldetag: 24.01.2012
(51) Int. Cl.: B60P 1/44

(54) **Verfahren zum Betreiben einer Hubladebühne**
Method for operating a cantilever lift
Procédé destiné au fonctionnement d'une plateforme de chargement

(43) Veröffentlichungstag der Anmeldung: 31.07.2013
(73) Patentinhaber: Bär Management- und Beteiligungsgesellschaft mbH, 74078 Heilbronn (DE)
(72) Erfinder: Bär, Tobias, 74078 Heilbronn (DE); Klink, Norman, 74243 Langenbrettach (DE)
(74) Vertreter: DREISS Patentanwälte PartG mbB

(56) Entgegenhaltungen:
- EP-A1- 0 773 136
- EP-A1- 0 832 781
- EP-A1- 1 719 661
- EP-A2- 2 520 460
- DE-A1- 10 330 929
- DE-A1-102006 062 231
- DE-A1-102009 052 662
- JP-A- 2001 163 595

## Beschreibung

Die Erfindung betrifft ein Verfahren zum Betreiben einer Hubladebühne bei einem Kraftfahrzeug, mit einer heb- und senkbaren Plattform, mit einem Hubwerk und mit Anschlusskomponenten zum Befestigen des Hubwerks an dem Fahrzeug, wobei die Plattform in allen Hubstellungen in einer gewählten Lage haltbar ist und wobei eine Belastung der Hubladebühne überwacht wird. Die Erfindung betrifft außerdem eine entsprechend ausgebildete Hubladebühne.

Beim Betrieb einer Hubladebühne, wie z.B. DE 10 2009 052 662 A1, kann es vorkommen, dass deren Plattform mit zu schweren Gegenständen belastet wird oder es infolge unsachgemäßer Handhabung der Hubladebühne zu unzulässig hohen Krafteinleitungen an verschiedenen Bereichen der Hubladebühne kommt. Eine zu hohe Belastung der Hubladebühne kann insbesondere die Plattform, das Hubwerk oder andere Komponenten der Hubladebühne beschädigen oder einen Benutzer der Hubladebühne gefährden.

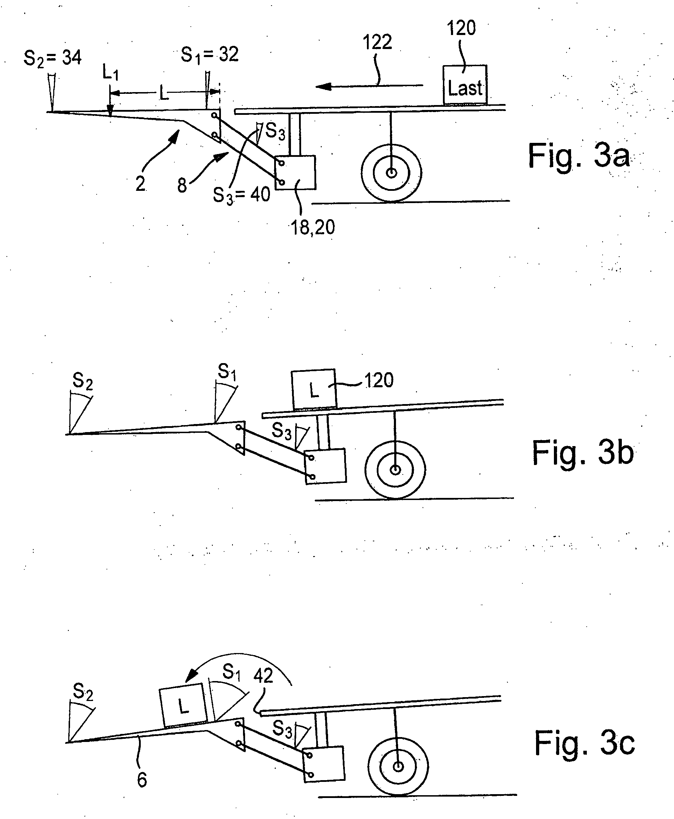

Bei hier in Rede stehenden Hubladebühnen umfasst das Hubwerk typischerweise einen kraftfahrzeugseitig abgestützten Hubzylinder, der an seinem anderen Ende insbesondere an einem oberen Tragarm des Hubwerks angreift und das Hubwerk und damit die am Hubwerk angelenkte Plattform zu heben und zu senken vermag. Des Weiteren umfasst das Hubwerk im Allgemeinen einen Neigezylinder oder Parallelzylinder, der insbesondere in einem unteren Lenker des vorzugsweise parallelogrammförmig ausgebildeten Hubwerks vorgesehen ist und mittels dessen die Plattform von der vertikalen Fahrposition in die horizontale Ladeposition und umgekehrt gebracht werden kann. Ferner kann mittels des Neigezylinders die Plattform im angehobenen Zustand beispielsweise ± 5 Grad oder mehr bezüglich der Waagrechten bzw. bezüglich der Ladeebene des Laderaums des Kraftfahrzeugs geneigt werden, um Steigungen auszugleichen oder die Plattform mit ihrem fahrzeugabgewandten Ende in der bestimmungsgemäßen Weise auf einer Laderampe abzulegen. Man unterscheidet bei Hubladebühnen der hier in Rede stehenden Art den Begriff der Last und des Lastmoments. Die Last, die auf die Hubladebühne einwirkt und vom Hubzylinder bzw. vom Hubzylinderstrang des Hubwerks getragen wird, wird durch die Gewichtskraft der Masse bestimmt, die auf der Plattform der Hubladebühne positioniert wird. Das Lastmoment wird hingegen durch die Last und den sogenannten Lastabstand L (s. Figur 3a) bestimmt, wobei der Lastabstand L typischerweise zwischen der schwerpunktmäßigen Kraftleinleitung durch die Last und dem fahrzeugseitigen Ende der Plattform abgemessen wird. Die einwirkende Kraft erzeugt demzufolge ein Lastmoment im physikalischen Sinne bezüglich des Anlenkungspunkts der Plattform am Hubwerk. Dieses Lastmoment wird durch den Neigzylinder bzw. Neigzylinderstrang aufgenommen. Weil das Lastmoment nicht nur durch die Erhöhung der Last, sondern in gleichem Maße durch die Erhöhung des Lastabstands zunimmt, wird vom Hubladebühnenhersteller in der Regel nicht nur die maximale Last, sondern zusätzlich der maximal zulässige Lastabstand für diese Last angegeben. Dies bedeutet, dass beim Beladen oder Entladen des Kraftfahrzeugs an einer Laderampe die Plattform stets mit ihrem fahrzeugabgewandten Ende, der sogenannten Plattformspitze, auf der Laderampe flächenhaft aufliegen muss, und zwar mit zur Plattformspitze hin abwärts gerichteter Neigung, damit eine unzulässig hohe Lastmomenteinleitung beim Überfahren des fahrzeugabgewandten Endes der Plattform, also des Bereichs, der sich außerhalb des zulässigen Lastabstands befindet, vermieden wird, indem die Plattformspitze durch die Laderampe abgestützt ist.

Hubladebühnen werden im Wesentlichen auf zweierlei Art betrieben. In einem ersten Anwendungsfall zum Heben der Last vom Erdboden zur Ladekante eines Aufbaus des Fahrzeuges wird der Druck in den Hydraulikzylindern durch ein sich öffnendes Druckbegrenzungsventil auf einen erlaubten Schwellenwert begrenzt. Ist die Last zu groß, öffnet das Druckbegrenzungsventil, und die Plattform lässt sich nicht anheben. Auf diese Weise ist bereits eine Überwachung der Belastung, also der (auf den Hubzylinder) einwirkenden Gewichtskraft, realisiert und das System vor Überlastung geschützt. Wird keine oder eine zulässige Last auf der Plattform gehoben, dann erfolgt der Vorgang des Hebens so lange, bis die Plattform auf Höhe der Ladekante des Aufbaus angekommen ist und das Hubwerk hydraulisch und mechanisch über den Hubzylinder gegen die Ladekante vorgespannt wird, um Elastizitäten des Gesamtsystems zu minimieren. Der Druck im Hubzylinder wird dabei auf den maximalen, vom Druckbegrenzungsventil festgelegten zulässigen Wert erhöht. Dann wird das Ventil am Hubzylinder geschlossen und der Druck quasi eingeschlossen. - Wird hingegen Last vom Aufbau des Fahrzeugs auf die leere Plattform gefahren, ist keine Druckänderung in den Hubzylindern auswertbar, da das Ventil am Hubzylinder den zuvor über das Druckbegrenzungsventil vorgegebenen maximalen Druck einschließt. Daher ist in diesem Betriebszustand eine Überlastkontrolle durch Druckmessung an dem oder den Hubzylindern nicht möglich. Die Veränderung des Drucks in den Neigezylindern wäre zwar auswertbar, weil diese nicht hydraulisch gegen einen Anschlag vorgespannt sind, jedoch kann hierdurch nur das Lastmoment, d.h. das Produkt aus Last und Lastabstand, erkannt werden, und somit kann keine eindeutige Aussage hinsichtlich einer Überlastung des Systems gemacht werden. Des Weiteren sind die Einflussparameter bei einer Druckmessung groß und insbesondere bei Temperatur- und Viskositätsänderung des Hydrauliköls und Veränderung der Reibungsparameter in den Lagern und Dichtungen des Zylinders sehr hoch. Hinzu kommen noch die relativ hohen Kosten der notwendigen Anzahl an Drucksensoren.

In einem zweiten Anwendungsfall wird die Hubladebühne als Überfahrbrücke zwischen dem Aufbau des Fahrzeugs und einer örtlich fest installierten Laderampe verwendet. Hierbei treten folgende Belastungen auf. Die Plattform ist gelenkig am Hubwerk gelagert, die Plattformspitze liegt idealerweise flächig auf der Rampe auf und wird von ihr gestützt. In der Praxis kann es auch vorkommen, dass die Auflage nur linienförmig oder im Extremfall punktförmig ist. Dies kann dann zu einer Überlastung der Plattform an der Spitze führen. Wird nun die Plattform beispielsweise mit einem (schweren) Flurförderfahrzeug und einer Ladung überfahren, dann kann dies einen weiteren Belastungsfall darstellen. Der Druck in dem Neigezylinder ist dabei nahe Null, da die Plattformspitze von der Laderampe gestützt wird. Eine Auswertung der Drücke könnte zu keiner Aussage hinsichtlich einer Überlastung des Systems führen.

Federt das Fahrzeug während eines Entladevorgangs aus, dann liegt die Plattformspitze nicht mehr auf der Rampe auf, sondern sie ist in der Luft. Wird hiervon ausgehend der Beladevorgang oder ein weiterer Entladevorgang fortgeführt, treten vielfache Überlastungen des Gesamtsystems auf, da der Lastabstand sich vom zulässigen Wert bis zur Plattformspitze vergrößert und somit unzulässig hohe Lastmomente wirken. Sowohl beim Entladen als auch beim Beladen wird ja die Plattformspitze, also das fahrzeugabgewandte Plattformende, überfahren.

Die nicht vorveröffentlichte EP 2 520 460 A2 der Anmelderin offenbart ein Verfahren zum Betreiben einer Hubladebühne, wobei eine Belastung der Hubladebühne überwacht wird und hierfür Neigungssensoren ausschließlich an der Plattform der Hubladebühne verwendet werden.

DE 10 2009 052 662 A1 offenbart ein Verfahren zum Betreiben einer Hubladebühne, wobei unter Verwendung eines an der Plattform vorgesehenen Neigungswinkelsensors und eines weiteren an einem Arm des Hubwerks vorgesehenen Neigungswinkelsensors eine Überwachung bei auf dem Boden oder einer Rampe aufliegender Plattform ausgeführt wird. Anhand der Signale dieser Neigungswinkelsensoren wird erkannt, ob das Kraftfahrzeug beim Be- oder Entladen einfedert oder ausfedert, und es wird dementsprechend die Bremse eines mechanischen Stellantriebs der Hubladebühne kurzzeitig gelöst, so dass die Hubladebühne sich dem Ein- oder Ausfederungszustand des Kraftfahrzeugs anpassen kann, so dass eine hierdurch bedingte Beschädigung von Komponenten der Hubladebühne vermieden werden kann.

EP 0 773 136 A1 offenbart eine Hubladebühne, wobei ein Neigungswinkelsensor an der Plattform und ein weiterer Neigungswinkelsensor an einem Lenker des Hubwerks vorgesehen sind, anhand derer die Stellung der Plattform und des Hubwerks festgestellt und gesteuert wird. Es wird in dieser Druckschrift vorgeschlagen, eine manuell angefahrene gewünschte Stellung der Hubladebühne anhand der Signale der Neigungswinkelsensoren abzuspeichern, so dass bei wiederholtem Heben und Senken immer wieder dieselbe Position automatisch angefahren werden kann. Weiter ist die Verwendung von Druck- oder Kraftaufnehmern, insbesondere Piezo-elektrischer Fühler oder Dehnungsmessstreifen, erwähnt, die die Belastung der Hubladebühne ermitteln und ihren Antrieb bei einer Überlastung abschalten.

EP 1 719 661 A1 zeigt eine Hubladebühne mit einer faltbaren, zusammenklappbare Plattformteile aufweisenden Plattform, die im zusammengefalteten Zustand unter den Ladeboden eines Kraftfahrzeugs gefahren werden kann. Es sind Neigungswinkelsensoren vorgesehen, mittels derer der Bewegungsablauf zum Ein- und Ausfahren der Ladeplattformteile in Abhängigkeit von Winkelsignalen dieser Sensoren automatisch gesteuert werden kann.

Der vorliegenden Erfindung liegt die Aufgabe zugrunde, ein Verfahren zum Betreiben einer Hubladebühne anzugeben, bei dem in erster Linie beim Entladen des Kraftfahrzeugs, also beim Verbringen der Ladung vom Laderaum des Kraftfahrzeugs auf die Plattform, eine zuverlässig ausführbare und zudem kostengünstig realisierbare Überwachung der Belastung der Hubladebühne verwirklicht werden kann.

Diese Aufgabe wird bei einem Verfahren der eingangs beschriebenen Art erfindungsgemäß dadurch gelöst, dass das Verfahren umfasst: Erfassen oder Ermitteln einer Verformung der Plattform , des Hubwerks oder der Anschlusskomponenten beim Verbringen von Ladung vom Laderaum des Kraftfahrzeugs auf die Plattform, wobei hierfür wenigstens ein an der Plattform vorgesehener Neigungswinkel- oder Beschleunigungssensor und wenigstens ein weiterer am Hubwerk oder an den Anschlusskomponenten oder fahrzeugfest vorgesehener Neigungswinkel- oder Beschleunigungssensor verwendet wird, und Überwachen der Belastung anhand der erfassten oder ermittelten Verformung, und dass beim Überwachen die Belastung, daraufhin überprüft wird, ob sie einem vorgegebenen einer Überlastungssituation entsprechenden Kriterium entspricht, und dass ein Protokolleintrag in einem Datenspeicher abgelegt wird und/oder eine Warnmeldung für einen Bediener der Hubladebühne erzeugt wird oder eine Betriebssperre bei der Steuerung der Hubladebühne implementiert wird, wenn die Belastung dem Kriterium entspricht

Dadurch, dass ein Sensor an der Plattform und ein weiterer Sensor außerhalb der Plattform am Hubwerk oder an den Anschlusskomponenten oder fahrzeugfest verwendet wird, lässt sich beim Verbringen von Ladung aus dem Laderaum auf die im Wesentlichen waagrecht positionierte Plattform eine sehr wirksame Überwachung der Belastung der Hubladebühne ausführen. Es wurde nämlich in erfinderischer Weise festgestellt, dass trotz der typischerweise hohen Vorspannung, mit der das Hubwerk gegen die Ladekante des Aufbaus des Kraftfahrzeugs angelegt wird - der Hubzylinder wird typischerweise mit der 1,2-fachen Nennlast beaufschlagt - beim Verbringen von Last vom Laderaum auf die Plattform eine Verformung der Plattform und/oder des Hubwerks und/oder der Anschlusskomponenten der Hubladebühne an das Fahrzeug auftreten kann. Dies kann durch Verwendung der beiden Sensoren erfasst werden.

Dadurch, dass die Verformung oder eine Verwindung der Hubladebühne ermittelt oder erfasst wird kann die Belastung der Hubladebühne überwacht werden. Es können unterschiedliche Belastungsprofile unterschieden werden, die anhand des gleichen Drucks in den Hydraulikzylindern nicht voneinander unterschieden werden könnten. Ein Drucksensor zum Erfassen eines Drucks in dem oder den Hydraulikzylindern ist zum Ausführen des Verfahrens nicht erforderlich.

Ferner kann die Belastung in jedem Betriebszustand der Hubladebühne überwacht werden. Beispielsweise ist die Überwachung der Belastung auch in einem Betriebszustand möglich, indem die angehobene Plattform mittels der hydraulischen Hubzylinder gegen eine Ladekante einer Ladeöffnung des Fahrzeugs gedrückt wird. Die Überwachung der Last anhand des Drucks im Hydraulikzylinder ist in diesem Betriebszustand praktisch nicht realisierbar, weil der Druck hauptsächlich von der Vorspannung der Plattform gegen die Ladekante herrührt.

Insgesamt wird mit Hilfe des Verfahrens die Genauigkeit und Zuverlässigkeit der Überwachung erhöht, wobei sich ein Umfang der Überwachung auf alle relevanten Betriebszustände der Hubladebühne erstrecken kann.

Mittels der Neigungswinkelsensoren oder Beschleunigungssensoren kann auf besonders wirtschaftliche Weise ein absoluter Neigungswinkel eines Bereichs, an dem der Sensor angebracht ist, relativ zur vertikalen Richtung der Erdbeschleunigung erfasst werden bzw. eine Änderung des absoluten Neigungswinkels im Zuge des Beladens oder Entladens erfasst werden kann. Die Sensoren können nach einem weiteren und unabhängigen Erfindungsgedanken in das Innere der Plattform, insbesondere in Hohlprofilteile der Plattform, eingesetzt sein. Sie können dort insbesondere durch Federkraft klemmschlüssig in einer intendierten Lage fixiert sein.

Beim Beladen und Entladen von schweren Lasten kommt es regelmäßig zu einem Einfedern bzw. Ausfedern des Kraftfahrzeugs, was sich in einer Änderung der Lage des Kraftfahrzeugs und der Komponenten der Hubladebühne und natürlich deren Sensoren äußert und nicht notwendigerweise auf eine Überlastungssituation hinweisen muss. Wird beispielsweise beim Entladen des Kraftfahrzeugs eine schwere Last von einem vorderen Bereich des Laderaums nach hinten in Richtung auf die Ladeöffnung verbracht, so federt das Kraftfahrzeug hinten ein. Dies kann beispielsweise durch den wenigstens einen Sensor am Hubwerk oder an den Anschlusskomponenten oder auch durch einen fahrzeugfest vorgesehenen Sensor erfasst werden. Solange die Last noch nicht über die Ladekante auf die Plattform verbracht wurde, besteht keine Überlastsituation. Je nach Ausbildung und Anordnung des Sensors an der Plattform kann dieses Einfedern auch durch diesen Sensor erfasst werden. Durch Vergleich mit dem Messwert oder Signal des weiteren Sensors außerhalb der Plattform lässt sich aber erkennen, dass noch keine Belastung oder Überlastung der Hubladebühne vorliegen kann. Erst wenn die Last über die Ladekante auf die Plattform verbracht wird und sich daraufhin der an der Plattform vorgesehene Sensor gegenüber dem verhältnismäßig starren Hubwerk und den Anschlusskomponenten sehr stark verändert, kann erfindungsgemäß auf eine Überlastsituation geschlossen werden.

In Weiterbildung der Erfindung wird vorgeschlagen, dass der eine an der Plattform vorgesehene Sensor im Bereich des fahrzeugseitigen Endes der Plattform bzw. sich nahe der Schwenkachse der Plattform befindet. Er ist vorzugsweise innerhalb eines Bereichs von 20 cm, vorzugsweise von 15 cm, ausgehend von der Schwenkachse der Plattform in Längsrichtung angeordnet.

Sofern der außerhalb der Plattform vorgesehene weitere Sensor am Hubwerk vorgesehen ist, so wird vorgeschlagen, dass er innerhalb der dem Kraftfahrzeug zugewandten Hälfte des Tragarms, vorzugsweise innerhalb des dem Kraftfahrzeug zugewandten Drittels des Tragarms und weiter vorzugsweise innerhalb von 30 cm, insbesondere innerhalb von 20 cm Entfernung von der fahrzeugseitigen Schwenkachse des Tragarms angeordnet ist. Auf diese Weise last sich eine überlastbedingte nachgiebige Verformung des Hubwerks anhand von deutlich unterschiedlichen Sensorsignalen ermitteln.

Es erweist sich weiter als vorteilhaft, dass anhand der Messwerte des einen an der Plattform vorgesehenen Sensors und des weiteren am Hubwerk oder an den Anschlusskomponenten oder fahrzeugfest vorgesehenen Sensors ein auf die Hubladebühne wirkendes Lastmoment ermittelt wird.

Weiter erweist es sich als vorteilhaft, dass unter Verwendung wenigstens eines weiteren an der Plattform vorgesehenen Sensors anhand der Messwerte der Sensoren an der Plattform und vorzugsweise auch anhand des Messwerts des weiteren am Hubwerk oder an den Anschlusskomponenten oder fahrzeugfest vorgesehenen Sensors die auf die Plattform wirkende Last und/oder der Lastabstand ermittelt werden.

Um eine Verformung der Plattform bezüglich verschiedener Stellen der Plattform zusätzlich ermitteln zu können, erweist es sich als vorteilhaft, wenn mehrere Sensoren an der Plattform vorgesehen sind und die Messwerte der an der Plattform vorgesehenen Sensoren an voneinander beabstandeten Bereichen der Plattform erfasst werden, insbesondere der eine Sensor im Bereich des fahrzeugseitigen Endes der Plattform und der weitere Sensor im Bereich des fahrzeugabgewandten Endes der Plattform vorgesehen ist. Hierbei kann es sich auch als vorteilhaft erweisen, wenn Sensoren an der Plattform vorgesehen sind, die in Querrichtung der Plattform voneinander beabstandet sind. Insbesondere können Sensoren so vorgesehen sein, dass sie in verschiedenen Ebenen oder Messachsen eine Verformung der Hubladebühne erfassen. Insbesondere können auch Sensoren mit mehreren Messachsen vorgesehen sein, also beispielsweise Neigungssensoren, die eine Veränderung eines absoluten Neigungswinkels in einer die Fahrtrichtung bzw. Längsrichtung einschließenden Vertikalebene und in einer die Querrichtung einschließenden Vertikalebene zu erfassen vermögen.

Sofern Messwerte an voneinander beabstandeten Bereichen der Plattform erfasst werden, kann prinzipiell in jedem Betriebszustand und in jeder Lage der Plattform durch Vergleich der Messwerte dieser Sensoren eine Verformung der Plattform direkt erfasst oder hieraus ermittelt werden. Hierbei erweist es sich wiederum als vorteilhaft, wenn Neigungswinkel- oder bevorzugt Beschleunigungssensoren verwendet werden. Werden mehrere Sensoren bei der Plattform verwendet, so erweist sich dies weiter als vorteilhaft, da solchenfalls eine Steigung der Straße oder eine Querneigung des Kraftfahrzeugs im unbelasteten Zustand der Hubladebühne erkannt und gewissermaßen herausgerechnet bzw. im Zuge einer noch zu erwähnenden Kalibrierung berücksichtigt werden kann.

Zur Durchführung des erfindungsgemäßen Verfahrens erweist es sich als vorteilhaft, wenn eine Größe Δᵢⱼ, die einen Unterschied zwischen Messwerten der Sensoren Sᵢ, Sⱼ charakterisiert, ermittelt wird und die Verformung und Belastung anhand dieser Größe Δᵢⱼ überwacht und beurteilt wird. Durch Überwachung und Beurteilung der Messwerte mehrerer Sensoren beim Betreiben der Hubladebühne kann die Belastung überwacht und eine etwaige Überlastung auch während des Betreibens der Hubladebühne erkannt werden.

Es erweist sich weiter als vorteilhaft, wenn eine Kalibrierung vorgenommen wird, wobei die Messwerte der Sensoren und/oder die Größe, die den Unterschied Δᵢⱼ zwischen Messwerten der Sensoren Sᵢ, Sⱼ charakterisiert, erfasst wird, wenn die Plattform zumindest im Wesentlichen unbelastet ist. Auf diese Weise kann dem Umstand Rechnung getragen werden, dass das Kraftfahrzeug auf einer ansteigenden oder abfallenden Straße oder auf in sonstiger Weise unebenem Untergrund abgestellt ist oder die Plattform vor der Belastung bezüglich der Waagrechten vorgeneigt oder infolge einer Schrägstellung des Fahrzeugs um die Längsachse verkippt ist.

Das erfindungsgemäße Verfahren wird so ausgeführt, dass beim Überwachen die Belastung daraufhin überprüft wird, ob sie einem vorgegebenen Kriterium entspricht, und dass ein Protokolleintrag in einem Datenspeicher abgelegt wird und/oder eine Meldung für einen Bediener der Hubladebühne erzeugt wird, wenn die Belastung dem Kriterium entspricht, und/oder die Historie der Überwachung insgesamt fortlaufend durch Protokolleintrag in einem Datenspeicher abgelegt wird. Das vorgegebene Kriterium kann dabei in an sich beliebiger Weise einen Zustand charakterisieren, der als Überlastungssituation herstellerseitig vorgesehen ist. Wird diese Überlastungssituation festgestellt, so wird in der vorstehend beschriebenen Weise verfahren. In bevorzugter Weise soll die Bedienperson der Hubladebühne, also typischerweise der Kraftfahrzeugfahrer, insbesondere beim Entladen des Kraftfahrzeugs, davon abgehalten werden, die Hubladebühne mit einer zu hohen Last und/oder mit einem zu hohen Lastmoment (Gewichtskraft multipliziert mit Lastabstand) zu beaufschlagen. Insoweit erweist sich die Ausgabe einer Meldung in Form eines Warnsignals als vorteilhaft oder gar die Implementierung einer Betriebssperre bei der Steuerung der Hubladebühne, so dass die Bedienperson gezwungen ist, die Last bei der Hubladebühne wieder zu reduzieren. Insgesamt wird auf diese Weise die Hubladebühne und deren Komponenten, also die Plattform, das Hubwerk sowie Anschlusskomponenten des Hubwerks an das Kraftfahrzeug geschont. In jedem Fall erweist sich die Protokollierung von als unzulässig erkannten Überlastsituationen als vorteilhaft. Sofern - wie vorausgehend erwähnt - die gesamte Historie der Überwachung insgesamt fortlaufend in einem Datenspeicher abgelegt wird, kann der ordnungsgemäße oder nicht ordnungsgemäße Betrieb der Hubladebühne rückwirkend festgestellt werden. Dies dient auch dazu, Bedienpersonen zu einem ordnungsgemäßen Betrieb der Hubladebühne anzuhalten.

Es wurde bereits darauf hingewiesen, dass beim Beladen und Entladen des Kraftfahrzeugs durch die damit einhergehende Verlagerung der Last sich die Lage des Aufbaus des Kraftfahrzeugs infolge Ein- bzw. Ausfederns des Kraftfahrzeugs verändert. Verändern sich die Messwerte beider Sensoren im wesentlichen in derselben Weise, so ist dies in aller Regel (noch) nicht auf eine Belastung der Hubladebühne zurückzuführen, sondern beispielsweise auf eine Lastverlagerung innerhalb des Kraftfahrzeugs. Wenn jedoch beim Entladen die Ladekante des Laderaums des Kraftfahrzeugs überfahren wird und in der Folge eine Belastung auf die Plattform ausgeübt wird, so ist dies typischerweise mit einer Verformung der Plattform, des Hubwerks oder der Anschlusskomponenten verbunden, die mittels des wenigstens einen an der Plattform vorgesehenen Sensors detektierbar und als solche durch Vergleich mit dem Messwert des weiteren außerhalb der Plattform vorgesehenen Sensors erkennbar ist. Dies wäre durch Beobachtung des Drucks im Neigezylinder nicht möglich, da hierdurch allenfalls das Lastmoment nicht aber die absolute Größe der Last bestimmt werden kann. Auch kann hierdurch nicht die belastungsbedingte Verformung der Plattform, des Hubwerks oder der Anschlusskomponenten erkannt werden.

Des weiteren betrifft die Erfindung eine Hubladebühne mit den Merkmalen des Anspruchs 10. Bevorzugte Weiterbildungen sind Gegenstand der Ansprüche 11 bis 15.

Eine insbesondere nachrüstbare Überwachungseinrichtung mit den ebenfalls im Anspruch 10 genannten Komponenten kann beispielsweise einen Satz von Neigungswinkel- oder Beschleunigungssensoren umfassen, die an der Plattform und am Hubwerk oder den Anschlusskomponenten der Hubladebühne befestigbar sind, und elektrische Leitungsmittel, mittels derer die Sensoren mit einer elektronischen Auswerteeinrichtung zum Verarbeiten von Messwerten der Sensoren zusammenwirken. Diese elektronische Auswerteeinrichtung der Überwachungseinrichtung kann in softwaremäßig realisierter Form bei der Steuereinrichtung der Hubladebühne vorgesehen sein - was bevorzugt ist - oder aber als separate Einrichtung ausgebildet und bei dem Kraftfahrzeug vorgesehen sein. Die Steuereinrichtung bzw. die Auswerteeinrichtung kann zum Ausführen des Verfahrens eingerichtet, insbesondere programmiert, sein. Es kann ein Speichermedium mit einem Computerprogramm vorgesehen sein, das so programmiert ist, dass die Steuereinrichtung bzw. die Auswerteeinrichtung das Verfahren ausführt, wenn das Computerprogramm auf der Steuereinrichtung bzw. der Auswerteeinrichtung abläuft. Die Überwachungseinrichtung umfasst vorzugsweise weiter einen Datenspeicher, um insbesondere durch Protokolleintrag Überlastungssituationen und vorzugsweise die gesamte überwachte Historie der Belastung festzuhalten und für spätere Auswerte- oder Kontrollzwecke dokumentieren zu können.

Weitere Merkmale, Vorteile und Einzelheiten der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
Figur 1 eine schematische Darstellung einer erfindungsgemäßen Hubladebühne,
Figur 2 ein Flussdiagramm eines Verfahrens zum Betreiben einer Überwachungsanordnung der Hubladebühne;
Figuren 3a-c verschiedene Belastungssituationen beim Betreiben einer Hubladebühne.

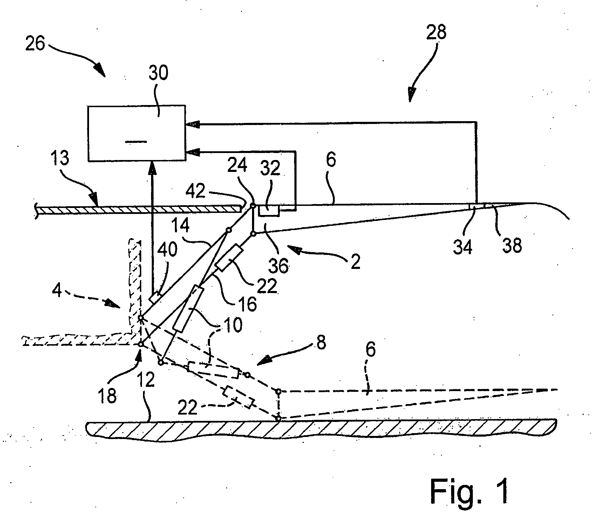

Figur 1 zeigt eine Hubladebühne 2, die an einem Heckbereich 4 eines Kraftfahrzeugs, beispielsweise eines Lastkraftfahrzeugs, angebaut ist.

Eine Plattform 6 der Hubladebühne 2 ist von einem im bevorzugt dargestellten Fall parallelogrammförmig ausgebildeten Hubwerk 8 so gehalten, dass sie mittels wenigstens eines Hubzylinders 10 heb- und senkbar ist und dabei ihre im wesentlichen horizontale Lage beibehält. Das in Figur 1 nur schematisch dargestellte Hubwerk 8 ist beidseits links und rechts des Kraftfahrzeugs vorgesehen, wobei nicht zwingend auf jeder Seite die noch zu erläuternden Zylinder vorgesehen werden müssen.

In Figur 1 ist die Plattform 6 mitsamt dem Hubwerk 6 mit durchgezogenen Linien in einer gegenüber einer Grundfläche 12, auf der das Kraftfahrzeug abgestellt ist, angehobenen Lage dargestellt. Auch die Ladeebene 13 des Fahrzeugaufbaus ist dargestellt. Die gestrichelte Darstellung zeigt die auf die Grundfläche 12 abgesenkte Plattform 6 und die entsprechende Lage des Hubwerks 8.

Das Hubwerk 8 umfasst beidseits je einen oberen Tragarm 14, der die obere Strebe eines Parallelogramms bildet, und einen unteren Arm 16, der die untere Strebe des Parallelogramms bildet. Der obere Tragarm 14 und der untere Arm 16 sind über nicht im einzelnen dargestellte Anschlusskomponenten 18 schwenkbar am Kraftfahrzeug angeordnet. Sie sind am kraftfahrzeugabgewandten Ende jeweils gelenkig mit der Plattform 6 verbunden. Gegen den oberen Tragarm 14 stützt sich ein Hubzylinder 10 ab; er stützt sich fahrzeugseitig gelenkig gegen die Anschlusskomponenten 18 der Hubladebühne ab. Diese Anschlusskomponenten 18 umfassen beispielsweise einen Querträger 20 (Figur 3a), an dem sämtliche Komponenten des Hubwerks 8 gehalten sind und der insgesamt beispielsweise an Längsträgern des Kraftfahrzeugs montierbar ist.

In dem unteren Arm 16 des Hubwerks 8 ist ein Neige- oder Parallelzylinder 22 vorgesehen, mittels dessen die Länge des unteren Arms 16 verstellbar ist. Hierdurch lässt sich die Plattform 6 um eine horizontale Achse 24 nach oben oder unten neigen und weiter in ihre vertikale Stellung, die sogenannte Fahrstellung, schwenken, in der sie den Aufbau des Kraftfahrzeugs verschließt, wenn keine zusätzlichen Türen vorgesehen sind.

Durch das parallelogrammförmig ausgebildete Hubwerk 8 behält die Plattform 6 beim Heben und Senken ihre im wesentlichen horizontale Lage bei.

Die Erfindung kann jedoch auch in Verbindung mit anderen Arten von Hubladebühnen, beispielsweise in Verbindung mit einem Vertikallift oder einer Hubladebühne mit einem elektromagnetisch betätigten Hubwerk, angewendet werden.Eine solche Hubladebühne mit elektromagnetisch betätigtem Hubwerk ist in der DE 10 2006 045 610 A1 offenbart.

Die Hubladebühne weist eine Überwachungsanordnung 26 mit einer Sensoranordnung 28 und einer Auswerteeinrichtung 30 auf. Die Sensoranordnung 28 umfasst einen ersten an der Plattform 6 vorgesehenen Sensor 32 und vorzugsweise, jedoch nicht notwendigerweise, einen zweiten an der Plattform 6 vorgesehenen Sensor 34, wobei der erste Sensor 32 am fahrzeugzugewandten Ende 36 der Plattform 6 und der zweite Sensor 34 am Fahrzeug abgewandten Ende 38 der Plattform 6 vorgesehen ist. Des Weiteren umfasst die Sensoranordnung 28 einen außerhalb der Plattform 6 am Hubwerk 8 oder an Anschlusskomponenten 18 der Hubladebühne vorgesehenen Sensor 40. Im beispielhaft angedeuteten Fall der Figur 1 ist der Sensor 40 am oberen Tragarm 14 vorgesehen, und zwar vorzugsweise innerhalb der dem Kraftfahrzeug zugewandten Hälfte des Tragarms 14 und weiter vorzugsweise nahe den gegenüber dem Tragarm 14 noch starreren Anschlusskomponenten 18 der Hubladebühne. Bei den Sensoren 32, 34, 40 handelt es sich vorzugsweise um Neigungswinkelsensoren in der Form von Beschleunigungssensoren, welche einen absoluten Winkel zur vertikalen Schwerkraftrichtung bestimmen.

Wenn beim Beladen eines Kraftfahrzeugs eine unzulässig hohe Last auf die am Boden abgesenkte und abgeneigte Plattform 6 geladen wird, so wird ein gewisser Überlastschutz bereits durch das im Hydraulikkreis des Hubzylinders 10 vorgesehene Druckbegrenzungsventil realisiert. Ist die Last zu groß, so vermag die Hydraulik das Hubwerk 8 und damit die Plattform 6 nicht anzuheben, da zuvor das Druckbegrenzungsventil öffnet. Beim Entladen des Kraftfahrzeugs ist die Situation hingegen komplexer, da die Bedienpersonen häufig bestrebt sind, die Fläche der Plattform 6 weitestgehend beim Entladen des Kraftfahrzeugs auszunutzen. Ausgehend vom angehobenen Zustand des Hubwerks 8 und einer im wesentlichen horizontalen Ausrichtung der Plattform 6, die die Bedienperson durch Ansteuerung des Neige- oder Parallelzylinders 22 einstellt, erweist es sich als vorteilhaft und zweckmäßig, wenn vor der Belastung der Plattform 6 eine Kalibrierung ausgeführt wird. In diesem angehobenen Zustand der Plattform drückt das Hubwerk 8 mit einem der fahrzeugzugewandten Seite der Plattform vorgelagerten, zumeist rollenförmigen Andrückelement (nicht dargestellt) mit einer Kraft, die durch das Druckbegrenzungsventil in der Hydraulik des Hubzylinders 10 begrenzt wird, gegen die Ladekante 42 des Aufbaus des Kraftfahrzeugs. Die Überwachungsanordnung 26 kann nun in vorbestimmter oder vorbestimmbarer Weise und gesteuert von einer Steuereinrichtung der Überwachungseinrichtung eine Kalibrierung ausführen. Die Kalibrierung wird vorzugsweise zu einem Zeitpunkt durchgeführt, für den zumindest mit hoher Wahrscheinlichkeit davon ausgegangen werden kann, dass die Plattform nicht oder nur geringfügig belastet ist.

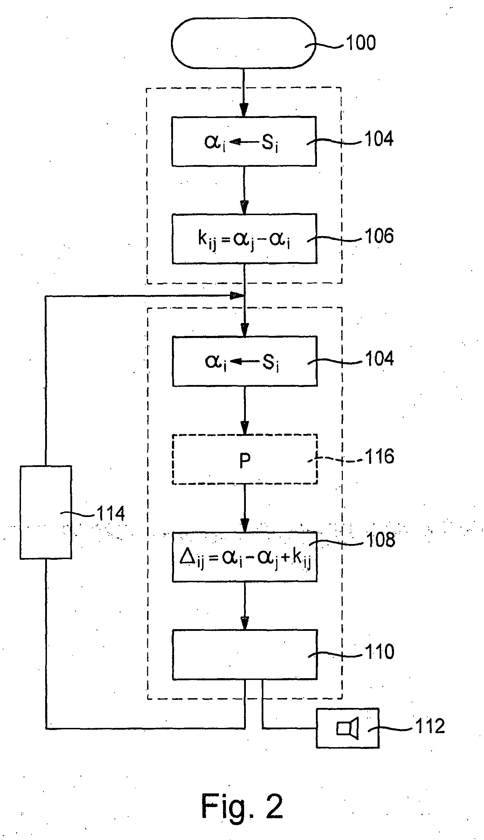

In dem Blockdiagramm nach Figur 2 bezeichnet das Bezugszeichen 100 den Beginn eines Verfahrens zum Betreiben der Hubladebühne, etwa das Öffnen des Laderaums des Kraftfahrzeugs, durch Verschwenken der Plattform von ihrer vertikalen in ihre horizontale Stellung. Wenn die Plattform 6 ihre horizontale Stellung erreicht hat und das Hubwerk 8 jedoch noch angehoben und unter Vorspannung gegen die Ladekante des Aufbaus anliegt, wird vorzugsweise eine Kalibrierung ausgeführt. Das Kalibrieren 102 umfasst einen Schritt 104, wobei mittels der Sensoren Sᵢ die einzelnen Messwerte, das heißt, im Fall von Neigungssensoren die einzelnen Neigungswinkel αᵢ der Sensoren Sᵢ erfasst werden. In einem weiteren Schritt 106 werden diese erfassten Messwerte bzw. Neigungswinkel αᵢ ausgewertet. Hierfür können Korrekturwerte kᵢⱼ so berechnet werden, dass zwischen den Messwerten ermittelte Differenzen, also insbesondere Differenzwinkel Δᵢⱼ zu Null gemacht werden. Hierdurch wird erreicht, dass die während der auszuführenden Überwachung im Zuge einer Belastung der Hubladebühne berechneten Differenzgrößen Δᵢⱼ der Sensoren Sᵢ bzw. Sⱼ den Wert Null aufweisen, wenn die Plattform 6 noch unbelastet ist.

Hierdurch kann beispielsweise einer Schrägstellung des Kraftfahrzeugs Rechnung getragen werden. Solange die Hubladebühne noch nicht belastet ist und beispielsweise - wie eingangs erörtert - Ladung innerhalb des Laderaums des Kraftfahrzeugs verlagert wird, kann der Schritt des Kalibrierens 102 immer wieder durchlaufen werden. Wird die Plattform 6 dann schließlich belastet, so lässt sich dies insbesondere dadurch feststellen, dass der wenigstens eine an der Plattform 6 vorgesehene Sensor 32 sich stärker verändert als der am Hubwerk 8 oder den gegenüber dem Hubwerk 8 noch starrer ausgebildeten Anschlusskomponenten 18 der Hubladebühne angeordnete Sensor 40. Durch Bestimmen der Differenzwerte Δᵢⱼ der Sensoren im Schritt 108 (gegebenenfalls und vorzugsweise bereinigt durch die zuvor bestimmten Korrekturwerte kᵢⱼ) lassen sich auswertbare Größen gewinnen, die auf eine Verformung der Plattform 6, des Hubwerks 8 oder der Anschlusskomponenten 18 und damit auf eine Beladung, das heißt, eine Belastung der Hubladebühne 2 schließen lassen. Durch Auswertung des Messwerts des wenigstens einen an der Plattform 6 vorgesehenen Sensors, vorzugsweise des Sensors 32 und des außerhalb der Plattform 6 an einem demgegenüber starreren Teil der Hubladebühne vorgesehenen wenigstens einen weiteren Sensors 40, insbesondere und vorzugsweise durch Differenzbildung Δᵢⱼ lässt sich ein vom Effekt des Einfederns oder Ausfederns des Kraftfahrzeugs losgelöstes Signal gewinnen, das einen direkten Schluss auf die Verformung der Hubladebühne und damit auf die Belastung der Hubladebühne zulässt. Schließlich wird im Schritt 110 überprüft, ob eine Überlastung der Hubladebühne vorliegt, indem im einfachsten Fall eine Schwellwertbetrachtung der Messwerte der Sensoren und insbesondere der Differenzwerte Δᵢⱼ ausgeführt wird. Je nach dem Ergebnis dieser Auswertung kann eine Meldung 112, insbesondere in Form eines akustisch oder visuell wahrnehmbaren Warnsignals erzeugt werden, und es wird vorzugsweise bei Erkennen einer Überlastsituation ein Protokolleintrag 114 in dem Datenspeicher vorgenommen. Weiter erweist es sich als vorteilhaft, wenn kontinuierlich die gesamte Historie der Überwachung in dem Datenspeicher auslesbar abgelegt wird. Die vorstehend beschriebene Überwachung nach dem Beladen der Plattform wird vorzugsweise immer wieder ausgeführt, um quasi kontinuierlich die Belastung der Hubladebühne zu überwachen. Es erweist sich bei der Ausführung des erfindungsgemäßen Verfahrens als vorteilhaft, dass anhand der Messwerte der Sensoren an der Plattform 6 und außerhalb der Plattform 6 an den starreren Hubwerkskomponenten 8 oder Anschlusskomponenten 18 der Hubladebühne auf das auf einwirkende Lastmoment (Last mal Lastabstand) geschlossen werden kann. Des weiteren erweist es sich als vorteilhaft, wenn der weitere zu dem Sensor 32 in Längsrichtung beabstandete Sensor 34 an der Plattform 6 vorgesehen wird.

Solchenfalls lässt sich durch Betrachtung der Differenz der Messwerte dieser Sensoren 32, 34 auf die absolute Größe der Last und auf den Lastabstand schließen. Es empfiehlt sich hier, die Differenz der Messwerte der Sensoren 32 und 40 und die Differenz der Messwerte der Sensoren 34 und 40 zu betrachten.

In Figur 2 ist ferner ein optionaler Schritt 116 angedeutet, im Zuge dessen ein Druck P innerhalb eines der Hydraulikzylinder erfasst wird und gegebenenfalls bei der Überwachung herangezogen wird.

Die Figuren 3a bis b zeigen eine typische Situation beim Entladen eines Kraftfahrzeugs, wobei eine sehr schwere in der Figur schematisch angedeutete Last 120 entladen werden soll (das Hubwerk ist zur Vereinfachung ohne Zylinder dargestellt). Wenn die Last 120, etwa mittels eines Flurförderzeugs, in Richtung des Pfeils 122 innerhalb des Laderaums des Kraftfahrzeugs nach hinten verlagert wird, so federt das Kraftfahrzeug, wie in Figur 3b angedeutet, hinten ein. Bei der Hubladebühne 2 sind die im Zusammenhang mit Figur 1 beschriebenen Sensoren 32, 34 und 40, die als S1, S2 bzw. S3 bezeichnet sind, derart vorgesehen, dass sie einen Neigungswinkel in einer die Kraftfahrzeuglängsachse einschließenden Vertikalebene, die mit der Zeichnungsebene der Figuren 3a bis c übereinstimmt, zu erfassen vermögen.

Beim Einfedern des Kraftfahrzeugs gemäß Figur 3b nimmt der von den Sensoren S1, S2, S3 erfasste Neigungswinkel der betreffenden Bestandteile oder Bereiche der Hubladebühne gegenüber der Vertikalen ungefähr gleichmäßig zu. Sobald die Last über die Ladekante 42 des Laderaums des Kraftfahrzeugs auf die Plattform 6 verbracht wird, nimmt der Messwert des Sensors S1 verhältnismäßig stark zu. Es kommt zu einer Lasteinleitung, die eine elastische Verformung der Hubladebühne bewirkt. Durch Anordnung des Sensors S3 außerhalb der Plattform 6, vorzugsweise nahe bei den verhältnismäßig starren Anschlusskomponenten 18, ist die Zunahme des Messwerts oder Signals des Sensors S1 deutlich größer als diejenige des am Hubwerk 8, an den Anschlusskomponenten 18 oder gar fahrzeugfest vorgesehenen Sensors S3. Auf diese Weise kann auf eine Belastung oder gar Überlastung der Hubladebühne geschlossen werden. Wenn die Last auf der Plattform noch weiter nach hinten verbracht wird (nicht dargestellt), so wird dies zu einer zunehmenden Verformung der Plattform 6 führen, die durch Vergleich der Messwerte oder Signale der Sensoren S1 und S2 erfasst und weiter verarbeitet werden kann.

Wie eingangs angedeutet, kann es sich als vorteilhaft erweisen, wenn bei der Hubladebühne oder bei der Plattform 6 Sensoren vorgesehen sind, die in Querrichtung voneinander beabstandet sind. Auf diese Weise kann eine Verformung der Hubladebühne und insbesondere der Plattform der Hubladebühne erfasst und ausgewertet werden, die auf eine einseitige oder nicht gleichmäßige Krafteinleitung links und rechts zurückzuführen ist.

Insbesondere kann es vorteilhaft sein, wenn Sensoren so angeordnet oder ausgebildet sind, dass eine Komponente des absoluten Neigungswinkels in einer Querebene der Hubladebühne, das heißt in einer Vertikalebene orthogonal zur Längsrichtung erfasst und ausgewertet werden kann. Es erweist sich als vorteilhaft, wenn dies zusätzlich zur Erfassung des absoluten Neigungswinkels in einer die Längsrichtung einschließenden Vertikalebene erfolgt. Auf diese Weise können vielfache Verwindungen und Verformungen der Hubladebühne und ihrer Komponenten, insbesondere der Plattform, erfasst und im Hinblick auf die Belastung ausgewertet werden.

## Patentansprüche

1. Verfahren zum Betreiben einer Hubladebühne (2) bei einem Kraftfahrzeug, mit einer heb- und senkbaren Plattform (6), mit einem Hubwerk (8) und mit Anschlusskomponenten (18) zum Befestigen des Hubwerks (8) an dem Fahrzeug, wobei die Plattform (6) in allen Hubstellungen in einer gewählten Lage haltbar ist und wobei eine Belastung der Hubladebühne (2) überwacht wird, wobei das Verfahren umfasst: Erfassen oder Ermitteln (104) einer Verformung der Plattform (6), des Hubwerks (8) oder der Anschlusskomponenten (18) beim Verbringen von Ladung vom Laderaum des Kraftfahrzeugs auf die Plattform (8), wobei hierfür wenigstens ein an der Plattform (6) vorgesehener Neigungswinkel- oder Beschleunigungssensor (32, 34) und wenigstens ein weiterer am Hubwerk (8) oder an den Anschlusskomponenten (18) oder fahrzeugfest vorgesehener Neigungswinkel- oder Beschleunigungssensor (40) verwendet wird, **gekennzeichnet durch** Überwachen (110) der Belastung anhand der erfassten oder ermittelten Verformung, und weiter **dadurch** gekennzeichnet, dass beim Überwachen die Belastung, daraufhin überprüft wird, ob sie einem vorgegebenen einer Überlastungssituation entsprechenden Kriterium entspricht, und dass ein Protokolleintrag in einem Datenspeicher (114) abgelegt wird und/oder eine Warnmeldung (112) für einen Bediener der Hubladebühne erzeugt wird oder eine Betriebssperre bei der Steuerung der Hubladebühne implementiert wird, so dass die Bedienperson gezwungen ist, die Last bei der Hubladebühne zu reduzieren, wenn die Belastung dem Kriterium entspricht.

2. Verfahren nach Anspruch 1, **dadurch gekennzeichnet, dass** der eine an der Plattform (6) vorgesehene Sensor (32) im Bereich des fahrzeugseitigen Endes (36) der Plattform (6), insbesondere nahe der Schwenkachse der Plattform, vorgesehen ist.

3. Verfahren nach einem oder mehreren der vorstehenden Ansprüche, **dadurch gekennzeichnet, dass** der weitere Sensor (40) außerhalb der Plattform (6) am Hubwerk (8) vorgesehen ist, und zwar innerhalb der dem Kraftfahrzeug zugewandten Hälfte des Tragarms (14), vorzugsweise innerhalb des dem Kraftfahrzeug zugewandten Drittels des Tragarms (14) und weiter vorzugsweise innerhalb von 30 cm, insbesondere innerhalb von 20 cm Entfernung von der fahrzeugseitigen Schwenkachse des Tragarms (14) angeordnet ist.

4. Verfahren nach einem oder mehreren der vorstehenden Ansprüche, **dadurch gekennzeichnet, dass** anhand der Messwerte des einen an der Plattform (6) vorgesehenen Sensors (32) und des weiteren am Hubwerk (8) oder an den Anschlusskomponenten (18) oder fahrzeugfest vorgesehenen Sensors (40) ein auf die Hubladebühne (2) wirkendes Lastmoment ermittelt wird.

5. Verfahren nach einem oder mehreren der vorstehenden Ansprüche, **dadurch gekennzeichnet, dass** unter Verwendung wenigstens eines weiteren an der Plattform (6) vorgesehenen Sensors (34) anhand der Messwerte der Sensoren (32, 34) an der Plattform und vorzugsweise auch anhand des Messwerts des weiteren am Hubwerk (8) oder an den Anschlusskomponenten (18) oder fahrzeugfest vorgesehenen Sensors (40) die auf die Plattform (6) wirkende Last (G) und/oder der Lastabstand (L) ermittelt werden.

6. Verfahren nach einem oder mehreren der vorstehenden Ansprüche, **dadurch gekennzeichnet, dass** die Messwerte der an der Plattform (6) vorgesehenen Sensoren (32, 34) an voneinander beabstandeten Bereichen der Plattform (6) erfasst werden, insbesondere der eine Sensor (32) im Bereich des fahrzeugseitigen Endes (36) der Plattform (6) und der weitere Sensor (34) im Bereich des fahrzeugabgewandten Endes (38) der Plattform (6) vorgesehen ist.

7. Verfahren nach einem oder mehreren der vorstehenden Ansprüche, **dadurch gekennzeichnet, dass** eine Größe (Δᵢⱼ), die einen Unterschied zwischen Messwerten der Sensoren (Sᵢ, Sⱼ; 32, 34, 40) charakterisiert, ermittelt wird und die Verformung und Belastung anhand dieser Größe (Aᵢⱼ) überwacht und beurteilt wird.

8. Verfahren nach einem oder mehreren der vorstehenden Ansprüche, **dadurch gekennzeichnet, dass** eine Kalibrierung (102) vorgenommen wird, wobei die Messwerte der Sensoren (Sᵢ, Sⱼ; 32, 34, 40) und/oder die Größe, die den Unterschied (Δᵢⱼ) zwischen Messwerten der Sensoren (Sᵢ, Sⱼ; 32, 34, 40) charakterisiert, erfasst wird, wenn die Plattform (6) zumindest im Wesentlichen unbelastet ist.

9. Verfahren nach einem oder mehreren der vorhergehenden Ansprüche, **dadurch gekennzeichnet, dass** die Historie der Überwachung insgesamt fortlaufend durch Protokolleintrag in einem Datenspeicher (112) abgelegt wird.

10. Hubladebühne (2) zur Durchführung des Verfahrens nach einem oder mehreren der vorstehenden Ansprüche, für den Anbau an ein Kraftfahrzeug, mit einer heb- und senkbaren Plattform (6), mit einem Hubwerk (8) und mit Anschlusskomponenten (18) zum Befestigen des Hubwerks (8) an dem Fahrzeug, wobei die Plattform (6) in allen Hubstellungen in einer gewählten Lage haltbar ist, wobei eine Überwachungseinrichtung (26) zum Erfassen oder Ermitteln (104) einer Verformung der Plattform (6), des Hubwerks (8) oder der Anschlusskomponenten (18) beim Verbringen von Ladung vom Laderaum des Kraftfahrzeugs auf die Plattform (8) vorgesehen ist, und die Überwachungseinrichtung (26) wenigstens einen an der Plattform (6) vorgesehenen Neigungswinkel- oder Beschleunigungssensor (32, 34) und wenigstens einen weiteren am Hubwerk (8) oder an den Anschlusskomponenten (18) oder fahrzeugfest vorgesehenen Neigungswinkel- oder Beschleunigungssensor (40) und eine Auswerteeinrichtung (30) zum Verarbeiten von Messwerten der Sensoren (32, 34, 40) umfasst, **dadurch gekennzeichnet, dass** die Auswerteeinrichtung (30) so ausgebildet ist, dass beim Verbringen von Ladung vom Laderaum des Kraftfahrzeugs auf die Plattform (8) anhand der Messwerte der Sensoren (32, 34, 40) auf eine Verformung der Plattform (17), des Hubwerks (8) oder der Anschlusskomponenten (18) geschlossen und somit die Belastung der Hubladebühne (2) überwacht werden kann und dass die Überwachungseinrichtung (26) einen Datenspeicher (114) umfasst und so ausgebildet ist, dass beim Überwachen die Belastung, daraufhin überprüft wird, ob sie einem vorgegebenen einer Überlastungssituation entsprechenden Kriterium entspricht (110), und dass ein Protokolleintrag in dem Datenspeicher (114) abgelegt wird und/oder eine Meldung (112) für einen Bediener der Hubladebühne (2) erzeugt wird oder eine Betriebssperre bei der Steuerung der Hubladebühne implementiert wird, so dass die Bedienperson gezwungen ist, die Last bei der Hubladebühne zu reduzieren, wenn die Belastung dem Kriterium entspricht.

11. Hubladebühne nach Anspruch 10, **dadurch gekennzeichnet, dass** der eine an der Plattform (6) vorgesehene Sensor (32) im Bereich des fahrzeugseitigen Endes (36) der Plattform (6), insbesondere nahe der Schwenkachse der Plattform, vorgesehen ist.

12. Hubladebühne nach Anspruch 10 oder 11, **dadurch gekennzeichnet, dass** der weitere Sensor (40) außerhalb der Plattform (6) am Hubwerk (8) vorgesehen ist, und zwar innerhalb der dem Kraftfahrzeug zugewandten Hälfte des Tragarms (14), vorzugsweise innerhalb des dem Kraftfahrzeug zugewandten Drittels des Tragarms (14) und weiter vorzugsweise innerhalb von 30 cm, insbesondere innerhalb von 20 cm Entfernung von der fahrzeugseitigen Schwenkachse des Tragarms (14) angeordnet ist

13. Hubladebühne nach Anspruch 10, 11 oder 12, **dadurch gekennzeichnet, dass** die Überwachungseinrichtung (26) so ausgebildet ist, dass anhand der Messwerte des einen an der Plattform (6) vorgesehenen Sensors (32, 34) und des weiteren am Hubwerk (8) oder an den Anschlusskomponenten (18) oder fahrzeugfest vorgesehenen Sensors (40) ein auf die Hubladebühne (2) wirkendes Lastmoment ermittelt wird.

14. Hubladebühne nach einem oder mehreren der Ansprüche 10 bis 13, **dadurch gekennzeichnet, dass** die Überwachungseinrichtung (26) einen weiteren an der Plattform (6) vorgesehenen Sensor (34) umfasst und so ausgebildet ist, dass anhand der Messwerte der Sensoren (32, 34) an der Plattform (6) und anhand des Messwerts des weiteren am Hubwerk (8) oder an den Anschlusskomponenten (18) oder fahrzeugfest vorgesehenen Sensors (40) die auf die Plattform (6) wirkende Last (G) und/oder der Lastabstand (L) ermittelt werden.

15. Hubladebühne nach einem oder mehreren der Ansprüche 10 bis 14, **dadurch gekennzeichnet, dass** die an der Plattform (6) vorgesehenen Sensoren (32, 34) an voneinander beabstandeten Bereichen der Plattform (6) vorgesehen sind, insbesondere der eine Sensor (32) im Bereich des fahrzeugseitigen Endes (32) der Plattform (6) und der weitere Sensor (34) im Bereich des fahrzeugabgewandten Endes (38) der Plattform (6) vorgesehen ist.

16. Hubladebühne nach einem oder mehreren der Ansprüche 10 bis 15, **dadurch gekennzeichnet, dass** die Überwachungseinrichtung (26) so ausgebildet ist, dass die Historie der Überwachung insgesamt fortlaufend durch Protokolleintrag in einem Datenspeicher (114) abgelegt wird.

## Claims

1. A method for operating a cantilever lift (2) in a motor vehicle, having a raisable and lowerable platform (6) with a lifting mechanism (8) and with connection components (18) for securing the lifting mechanism (8) to the vehicle, wherein in all lifting positions the platform (6) is capable of being kept in a selected position, and wherein a load stress of the cantilever lift (2) is monitored, the method including: detecting or ascertaining (104) a deformation of the platform (6), lifting mechanism (8) or connection components (18) when cargo is brought from the cargo space of the motor vehicle onto the platform (8), for which purpose at least one angle of inclination sensor or acceleration sensor (32, 34), provided on the platform (6), and at least one further angle of inclination sensor or acceleration sensor (40), provided on the lifting mechanism (8) or on the connection components (18) or in a manner affixed to the vehicle is used, **characterized by** monitoring (110) of the load stress on the basis of the detected or ascertained deformation, and further **characterized in that** upon monitoring the load stress, a check is thereupon made as to whether it meets a predetermined criterion corresponding to an overloading situation; and that a log entry is deposited in a data store (114) and/or a warning report (112) for a user of the cantilever lift is generated, or a lock that prevents operation is implemented in controlling the cantilever lift, so that the user is forced to reduce the load on the cantilever lift if the load stress meets the criterion.

2. The method of claim 1, **characterized in that** the one sensor (32) provided on the platform (6) is provided in the vicinity of the end (36) toward the vehicle of the platform (6), in particular near the pivot axis of the platform.

3. The method of one or more of the foregoing claims, **characterized in that** the further sensor (40) is provided outside the platform (6) on the lifting mechanism (8), and specifically is located inside the half of the support arm (14) oriented toward the motor vehicle, preferably inside the third of the support arm (14) oriented toward the motor vehicle, and further preferably within a distance of 30 cm, in particular 20 cm, from the pivot axis, toward the vehicle, of the support arm (14).

4. The method of one or more of the foregoing claims, **characterized in that** a load moment acting on the cantilever lift (2) is ascertained on the basis of the measured values of the one sensor (32) provided on the platform (6) and of the further sensor (40) provided on the lifting mechanism (8) or on the connection components (18) or in a manner affixed to the vehicle.

5. The method of one or more of the foregoing claims, **characterized in that** using at least one further sensor (34) provided on the platform (6), the load (G) acting on the platform (6) and/or the load spacing (L) is ascertained on the basis of the measured values of the sensors (32, 34) on the platform and preferably also on the basis of the measured value of the further sensor (40) provided on the lifting mechanism (8) or on the connection components (18) or in a manner affixed to the vehicle.

6. The method of one or more of the foregoing claims, **characterized in that** the measured values of the sensors (32, 34) provided on the platform (6) are detected in spaced-apart regions of the platform (6), and in particular the one sensor (32) is provided in the vicinity of the end (36) toward the vehicle of the platform (6), and the further sensor (34) is provided in the vicinity of the end (38) remote from the vehicle of the platform (6).

7. The method of one or more of the foregoing claims, **characterized in that** a variable (Δᵢⱼ), which characterizes a difference between measured values of the sensors (Sᵢ, Sⱼ, 32, 34, 40) is ascertained, and the deformation and load stress are monitored and assessed on the basis of this variable (Δᵢⱼ).

8. The method of one or more of the foregoing claims, **characterized in that** a calibration (102) is performed, in which the measured values of the sensors (Sᵢ, Sⱼ, 32, 34, 40) and/or the variable that characterizes the difference (Δᵢⱼ) between measured values of the sensors (Sᵢ, Sⱼ, 32, 34, 40) is detected if the platform (6) is at least substantially not loaded.

9. The method of one or more of the foregoing claims, **characterized in that** the history of the monitoring is deposited in a data store (112) completely and continuously by means of log entry.

10. A cantilever lift (2) for performing the method of one or more of the foregoing claims, for mounting on a motor vehicle, having a raisable and lowerable platform (6) with having a lifting mechanism (8) and with connection components (18) for securing the lifting mechanism (8) to the vehicle, wherein in all lifting positions the platform (6) is capable of being kept in a selected position, and wherein a monitoring device (26) is provided for detecting or ascertaining (104) a deformation of the platform (6), lifting mechanism (8) or connection components (18) when cargo is brought from the cargo space of the motor vehicle onto the platform (8), and the monitoring device (26) includes at least one angle of inclination sensor or acceleration sensor (32, 34) provided on the platform (6) and at least one further angle of inclination sensor or acceleration sensor (40) provided on the lifting mechanism (8) or on the connection components (18) or in a manner affixed to the vehicle, and the method also includes an evaluation device (30) for processing measured values of the sensors (32, 34, 40), **characterized in that** the evaluation device (30) is embodied such that when cargo is brought from the cargo space of the motor vehicle onto the platform (8), a conclusion about a deformation of the platform (17), of the lifting mechanism (8) or of the connection components (18) is drawn on the basis of the measured values of the sensors (32, 34, 40) and the load stress of the cantilever lift (2) can thus be monitored; and that the monitoring device (26) includes a data store (114) and is embodied such that upon monitoring of the load stress, it is thereupon checked whether it meets a predetermined criterion (110) corresponding to an overloading situation; and that a log entry is deposited in the data store (114) and/or a report (112) for a user of the cantilever lift (2) is generated, or a lock that prevents operation is implemented in controlling the cantilever lift, so that the person using it is forced to reduce the load on the cantilever lift if the load stress meets the criterion.

11. The cantilever lift of claim 10, **characterized in that** the one sensor (32) provided on the platform (6) is provided in the vicinity of the end (36) toward the vehicle of the platform (6), in particular near the pivot axis of the platform.

12. The cantilever lift of claim 10 or 11, **characterized in that** that the further sensor (40) is provided outside the platform (6) on the lifting mechanism (8), and specifically is located inside the half of the support arm (14) oriented toward the motor vehicle, preferably inside the third of the support arm (14) oriented toward the motor vehicle, and further preferably within a distance of 30 cm, in particular 20 cm, from the pivot axis, toward the vehicle, of the support arm (14).

13. The cantilever lift of claim 10, 11 or 12, **characterized in that** the monitoring device (26) is embodied such that a load moment acting on the cantilever lift (2) is ascertained on the basis of the measured values of the one sensor (32, 34) provided on the platform (6) and of the further sensor (40) provided on the lifting mechanism (8) or on connection components (18) or in a manner affixed to the vehicle.

14. The cantilever lift of one or more of claims 10 through 13, **characterized in that** the monitoring device (26) includes a further sensor (34) provided on the platform (6) and is embodied such that the load (G) acting on the platform (6) and/or the load spacing (L) is ascertained on the basis of the measured values of the sensors (32, 34) on the platform (6) and on the basis of the measured value of the further sensor (40) provided on the lifting mechanism (8) or on the connection components (18) or in a manner affixed to the vehicle.

15. The cantilever lift of one or more of claims 10 through 14, **characterized in that** the sensors (32, 34) provided on the platform (6) are provided in spaced-apart regions of the platform (6), and in particular the one sensor (32) is provided in the vicinity of the end (32) toward the vehicle of the platform (6), and the further sensor (34) is provided in the vicinity of the end (38) remote from the vehicle of the platform (6).

16. The cantilever lift of one or more of claims 10 through 15, **characterized in that** the monitoring device (26) is embodied such that the history of the monitoring is deposited in a data store (114) completely and continuously by means of log entry.

## Revendications

1. Procédé pour faire fonctionner une plate-forme élévatrice de chargement (2) par l'intermédiaire d'un véhicule à moteur, ayant une plate-forme levable et abaissable (6), un mécanisme de levage (8) et des composants de raccordement (18) pour fixer le mécanisme de levage (8) sur le véhicule, dans lequel la plate-forme (6), dans toutes les positions de levage, peut demeurer dans une position sélectionnée, et dans lequel une charge sur la plate-forme élévatrice de chargement (2) est surveillée, le procédé comprenant les étapes consistant à :
détecter ou déterminer (104) une déformation de la plate-forme (6), du mécanisme de levage (8) ou des composants de raccordement (18) lors de la mise en place d'une charge à partir de l'espace de chargement du véhicule jusque sur la plate-forme (8), ce pour quoi vont être utilisés au moins un capteur d'angle d'inclinaison ou d'accélération (32, 34) prévu au niveau de la plate-forme (6) et au moins un capteur d'angle d'inclinaison ou d'accélération supplémentaire (40) prévu au niveau du mécanisme de levage (8) ou des composants de raccordement (18), ou fixé sur le véhicule,
**caractérisé par** la surveillance (110) de la charge en fonction de la déformation détectée ou déterminée, et **caractérisé en outre en ce que** la surveillance de la charge permet de vérifier si elle correspond à un critère donné correspondant à une situation de surcharge, et **en ce qu'**une entrée de protocole est stockée dans une mémoire de données (114), et/ou **en ce qu'**un avertissement (112) pour un utilisateur de la plate-forme élévatrice de chargement est généré, ou **en ce qu'**une interruption de service est mise en oeuvre en commandant la plate-forme élévatrice de chargement, de sorte que l'utilisateur est obligé de réduire le chargement sur la plate-forme élévatrice de chargement lorsque la charge correspond au critère.

2. Procédé selon la revendication 1, **caractérisé en ce que** le capteur (32) prévu au niveau de la plateforme (6) est prévu dans la zone de l'extrémité côté véhicule (36) de la plate-forme (6), en particulier à proximité de l'axe de pivotement de la plate-forme.

3. Procédé selon l'une quelconque des revendications précédentes, **caractérisé en ce que** le capteur supplémentaire (40) est prévu à l'extérieur de la plate-forme (6) sur le mécanisme de levage (8), et est agencé à l'intérieur de la moitié du bras de support (14) faisant face au véhicule à moteur, de préférence à l'intérieur du bras de support (14) faisant face au véhicule à moteur, et de manière plus préférée est agencé à moins de 30 cm, en particulier à moins de 20 cm de distance de l'axe de pivotement côté véhicule à moteur du bras de support (14).

4. Procédé selon l'une quelconque des revendications précédentes, **caractérisé en ce qu'**à l'aide des valeurs de mesure du capteur (32) prévu au niveau de la plate-forme (6) et du capteur supplémentaire (40) prévu sur le mécanisme de levage (8) ou les composants de raccordement (18), ou fixé sur le véhicule à moteur, un couple de charge agissant sur la plate-forme élévatrice de chargement (2) est déterminé.

5. Procédé selon l'une quelconque des revendications précédentes, **caractérisé en ce qu'**en utilisant au moins un capteur supplémentaire (34) prévu au niveau de la plate-forme (6) à l'aide des valeurs de mesure des capteurs (32, 34) sur la plate-forme (6), et de préférence également à l'aide des valeurs de mesure du capteur supplémentaire (40) prévu sur le mécanisme de levage (8) ou les composants de raccordement (18), ou fixé sur le véhicule à moteur, la charge (G) agissant sur la plate-forme (6) et/ou le centre de gravité de la charge (L) est déterminé(e).

6. Procédé selon l'une quelconque des revendications précédentes, **caractérisé en ce que** les valeurs de mesure des capteurs (32, 34) prévus sur la plate-forme (6) sont enregistrées dans des zones espacées les unes des autres de la plate-forme (6), le capteur (32) étant prévu en particulier dans la zone de l'extrémité côté véhicule à moteur (36) de la plate-forme (6), et le capteur supplémentaire(34) dans la zone de l'extrémité (38) opposée au véhicule à moteur de la plate-forme (6).

7. Procédé selon l'une quelconque des revendications précédentes, **caractérisé en ce qu'**une grandeur (Δᵢⱼ) est déterminée, qui caractérise une différence entre des valeurs de mesure des capteurs (Sᵢ, Sⱼ; 32, 34, 40), et la déformation et la charge sont surveillées et évaluées à l'aide de cette grandeur (Δᵢⱼ).

8. Procédé selon l'une quelconque des revendications précédentes, **caractérisé en ce qu'**un calibrage (102) est réalisé, dans lequel les valeurs de mesure des capteurs (Sᵢ, Sⱼ ; 32, 34, 40) et/ou la grandeur (Δᵢⱼ), qui caractérise la différence entre des valeurs de mesure des capteurs (Sᵢ, Sⱼ ; 32, 34, 40), est déterminée lorsque la plate-forme (6) au moins sensiblement déchargée.

9. Procédé selon l'une quelconque des revendications précédentes, **caractérisé en ce que** l'historique de la surveillance est stocké globalement en continu par une entrée de protocole dans une mémoire de données (112).

10. Plate-forme élévatrice de chargement (2) pour mettre en oeuvre un procédé selon l'une quelconque des revendications précédentes, destinées à être montée sur un véhicule à moteur, une plate-forme levable et abaissable (6), un mécanisme de levage (8) et des composants de raccordement (18) pour fixer le mécanisme de levage (8) sur le véhicule, dans lequel la plate-forme (6), dans toutes les positions de levage, peut demeurer dans une position sélectionnée, et dans lequel un dispositif de surveillance (26) est prévu pour détecter ou déterminer (104) une déformation de la plate-forme (6), du mécanisme de levage (8) ou des composants de raccordement (18) lors de la mise en place d'une charge à partir de l'espace de chargement du véhicule à moteur jusque sur la plate-forme (8), et le dispositif de surveillance (26) présente au moins un capteur d'angle d'inclinaison ou d'accélération (32, 34) prévu au niveau de la plate-forme (6) et au moins un capteur d'angle d'inclinaison ou d'accélération supplémentaire (40) prévu au niveau du mécanisme de levage (8) ou des composants de raccordement (18), ou fixé sur le véhicule, et un dispositif d'exploitation (30) pour traiter les valeurs de mesure des capteurs (32, 34, 40),
**caractérisée en ce que** le dispositif d'exploitation (30) est réalisé de telle sorte qu'en mettant en place une charge à partir de l'espace de chargement du véhicule à moteur jusque sur la plate-forme (8), à l'aide des valeurs de mesure des capteurs (32, 34, 40), une déformation de la plate-forme (6), du mécanisme de levage (8) ou des composants de raccordement (18) peut être limitée et la charge de la plate-forme élévatrice de chargement (2) peut être surveillée, et **en ce que** le dispositif de surveillance (26) présente une mémoire de données (114) et est réalisé de sorte que la surveillance de la charge permet de vérifier si elle correspond à un critère donné correspondant à une situation de surcharge (110), et **en ce qu'**une entrée de protocole est stockée dans une mémoire de données (114), et/ou **en ce qu'**un avertissement (112) pour un utilisateur de la plate-forme élévatrice de chargement (2) est généré, ou **en ce qu'**une interruption de service est mise en oeuvre en commandant la plate-forme élévatrice de chargement, de sorte que l'utilisateur est obligé de réduire le chargement sur la plate-forme élévatrice de chargement lorsque la charge correspond au critère.

11. Plate-forme élévatrice de chargement selon la revendication 10, **caractérisée en ce que** le capteur (32) prévu au niveau de la plateforme (6) est prévu dans la zone de l'extrémité côté véhicule (36) de la plate-forme (6), en particulier à proximité de l'axe de pivotement de la plate-forme.

12. Plate-forme élévatrice de chargement selon la revendication 10 ou 11, **caractérisée en ce que** le capteur supplémentaire (40) est prévu à l'extérieur de la plate-forme (6) sur le mécanisme de levage (8), et est agencé à l'intérieur de la moitié du bras de support (14) faisant face au véhicule à moteur, de préférence à l'intérieur du bras de support (14) faisant face au véhicule à moteur, et de manière plus préférée est agencé à moins de 30 cm, en particulier à moins de 20 cm de distance de l'axe de pivotement côté véhicule à moteur du bras de support (14).

13. Plate-forme élévatrice de chargement selon la revendication 10, 11 ou 12, **caractérisée en ce que** le dispositif de surveillance (26) est conçu de telle sorte qu'à l'aide des valeurs de mesure du capteur (32) prévu au niveau de la plate-forme (6) et du capteur supplémentaire (40) prévu sur le mécanisme de levage (8) ou les composants de raccordement (18), ou fixé sur le véhicule à moteur, un couple de charge agissant sur la plate-forme élévatrice de chargement (2) est déterminé.

14. Plate-forme élévatrice de chargement selon l'une quelconque des revendications 10 à 13, **caractérisée en ce que** le dispositif de surveillance (26) comprend un capteur supplémentaire (34) prévu sur la plate-forme (6), et est réalisée de telle sorte qu'à l'aide des valeurs de mesure des capteurs (32, 34) sur la plate-forme (6), et à l'aide des valeurs de mesure du capteur supplémentaire (40) prévu sur le mécanisme de levage (8) ou les composants de raccordement (18), ou fixé sur le véhicule à moteur, la charge (G) agissant sur la plate-forme (6) et/ou le centre de gravité de la charge (L) est déterminé (e).

15. Plate-forme élévatrice de chargement selon l'une quelconque des revendications 10 à 14, **caractérisée en ce que** les capteurs (32, 34) prévus sur la plate-forme (6) sont prévus dans des zones espacées l'une de l'autre de la plate-forme (6), en particulier un capteur (32) prévu dans la zone de l'extrémité côté véhicule à moteur (32) de la plate-forme (6), et le capteur supplémentaire (34) prévu dans la zone de l'extrémité (38) opposée au véhicule à moteur de la plate-forme (6) .

16. Plate-forme élévatrice de chargement selon l'une quelconque des revendications 10 à 15, **caractérisé en ce que** le dispositif de surveillance (26) est réalisé de sorte que l'historique de la surveillance est stocké globalement en continu par une entrée de protocole dans une mémoire de données (114).
